# FASCICULE DE BREVET EUROPEEN

(11) **EP 4 139 611 B1**
(45) Date de publication et mention de la délivrance du brevet: **21.02.2024**
(21) Numéro de dépôt: 21731225.5
(22) Date de dépôt: 23.04.2021
(51) Int. Cl.: F24D 3/16, B23K 26/21, F24D 3/14, F24F 5/00, F28D 1/047, F28F 1/22, E04C 2/52, B23K 101/14, F28D 21/00

(54) **PANNEAU CLIMATIQUE**
KLIMAKONTROLLPLATTE
CLIMATE CONTROL PANEL

(30) Priorité: 23.04.2020 FR 2004069
(43) Date de publication de la demande: 01.03.2023
(73) Titulaire: Scherrer, Jean-Marc, 68400 Riedisheim (FR); Lang, Damien, 67100 Strasbourg (FR); Lallement, Amandine, 68520 Burnhaupt-Le-Haut (FR)
(72) Inventeur: Scherrer, Jean-Marc, 68400 Riedisheim (FR); Lang, Damien, 67100 Strasbourg (FR); Lallement, Amandine, 68520 Burnhaupt-Le-Haut (FR)
(74) Mandataire: IP Trust
(86) Numéro de dépôt international: PCT/FR2021/050710
(87) Numéro de publication internationale: WO 2021/214418

(56) Documents cités:
- EP-A1- 2 653 792
- EP-A2- 0 955 503
- WO-A1-2019/155007
- DE-A1-102010 033 176
- DE-A1-102018 111 136
- DE-U1- 9 304 900
- FR-A1- 2 712 380
- GB-A- 2 397 642

## Description

### Domaine de l'invention

La présente invention concerne un système rayonnant de plafond ou de paroi pour le chauffage et/ou le rafraîchissement d'un local de bâtiment par rayonnement thermique.

### Discussion de l'état de la technique

Fin des années 1990, les premiers bâtiments administratifs ont été équipés avec des plafonds rayonnants, d'abord pour le rafraîchissement, puis également pour le chauffage. Plus récemment, cette technique est utilisée dans différents types de bâtiments. En raison de son prix d'installation, d'autres techniques de climatisation sont toujours très répandues, cependant les plafonds rayonnants ont une plus grande efficacité énergétique et procurent un plus grand confort. Ils présentent néanmoins l'inconvénient de développer une puissance de refroidissement limité de par le risque de condensation.

On connaît les panneaux rayonnants utilisant une tubulure caloportrice disposée sur une plaque métallique. De l'eau chaude ou froide est injectée dans la tubulure, par contact entre la tubulure et la plaque, l'énergie thermique contenue dans le fluide caloporteur est cédée par conduction de la tubulure à la plaque qui se réchauffe ou se refroidit.

La différence de température entre la température de la plaque et l'air ambiant génère un rayonnement thermique de la plaque vers la pièce dans laquelle le panneau est installé.

Un mode de réalisation particulier limité à un échangeur de chaleur basé sur l'énergie solaire est décrit dans la demande DE 30 30 743 A1 (Soptim Ingenieurbüro GmbH). Cette demande décrit un échangeur de chaleur se composant d'une plaque et d'un système de tuyauterie à travers lequel un fluide est dirigé. Les tuyaux chauffant le fluide sont noyés dans des tuiles. Ces dernières peuvent être posées sur des chevrons contenant chacun une conduite d'alimentation et d'évacuation du fluide qui les traverse. La conception permet une installation facile sur une maison existante sans affecter l'apparence, en plus de laquelle la capacité totale de l'échangeur de chaleur est facilement augmentée ultérieurement si nécessaire.

Le document EP 2 762 787 A2 (BARCOL AIR [CH]) décrit un élément de climatisation comprenant une plaque radiante en aluminium et une couche de matériau phono-absorbant non-tissé. La plaque radiante est reliée thermiquement à des tuyaux dans lesquels passe un agent caloporteur par soudage d'une pluralité de plaques intermédiaires en aluminium, chaque plaque intermédiaire étant préalablement soudée à une portion droite d'un tuyau.

Il est connu que la puissance thermique émise par le panneau est directement proportionnelle à la surface de la plaque Sp ainsi qu'à Tp⁴ avec Tp : température de la plaque en degré Kelvin [K]. L'inconvénient de cette technologie est qu'elle ne permet pas d'obtenir une température uniforme de la plaque Tp.

En effet (en mode froid), la plaque va être plus froide au niveau de chaque tubulure en contact avec cette dernière puis va se réchauffer dans l'espace entre 2 tubulures.

La puissance admissible sera donc réduite à régime d'eau fixée.

CH 714 027 A2 (Energie Solaire SA) décrit un élément rayonnant modulaire de plafond ou de paroi pour le chauffage et/ou le rafraîchissement d'un local de bâtiment et un système rayonnant comprenant une pluralité de ces éléments. L'élément rayonnant modulaire comprend un tuyau permettant le passage d'un fluide caloporteur en son intérieur, et une plaque en cuivre soudée au tuyau. L'élément rayonnant modulaire comprend en outre une plaque d'habillage recouvrant la plaque en cuivre, la plaque d'habillage comprenant des trous traversant dimensionnés de sorte à laissant passer des ondes sonores au travers de la plaque d'habillage. L'invention concerne également une méthode de fabrication de l'élément rayonnant modulaire.

DE 93 04 900 U1 (ARBONIA AG) décrit un panneau refroidi à l'eau, par ex. à usage métallurgique, construit à partir d'une pluralité de longueurs de tube de section creuse rectangulaire avec un tube adjacent longueurs orientées coin à coin dans un réseau de losanges, avec des diagonales géométriques des tubes dans un plan commun, ou généralement ainsi, et avec des moyens pour fixer les tubes dans une telle orientation, et avec des moyens pour assurer la communication d'écoulement d'eau entre une partie d'extrémité d'une longueur de tube et une partie d'extrémité d'une longueur de tube adjacente.

GB 2 397 642 A (KENNEDY PHILIP ANDREW [GB]) décrit un élément de transfert de chaleur comprenant des première et seconde feuilles métalliques fusionnées ensemble et ayant un tube disposé entre les feuilles. Les feuilles métalliques peuvent être en aluminium ou en alliage d'aluminium, peuvent être carrées ou rectangulaires, peuvent être de taille identique ou différente et peuvent avoir des perforations sur une ou les deux feuilles pour l'absorption acoustique. Le tube peut être en cuivre ou en alliage de cuivre et avoir une forme en serpentin et peut être un tube aplati qui est dilaté ou gonflé avec de l'air comprimé de sorte qu'un côté ou les deux côtés de l'élément de transfert de chaleur aient une surface surélevée. Le tube peut être formé de deux feuilles de feuille métallique placées ensemble et fixées ensemble le long de leurs bords par soudage, brasage ou un adhésif et expansées ou gonflées l'une de l'autre. Les éléments peuvent être utilisés comme éléments radiatifs et convectifs et une pluralité d'éléments assemblés côte à côte pour former une poutre d'échange thermique pour le chauffage ou le refroidissement qui peut être incorporée dans les plafonds, les murs ou les planchers de locaux domestiques ou commerciaux.

DE 10 2010 033176 A1 (KREITZ GUENTER [DE]) décrit un échangeur de chaleur ayant une surface de refroidissement et des tuyaux de refroidissement, où l'eau de refroidissement est fournie comme agent de revenu. La surface de refroidissement est dotée d'une élévation pour agrandir la surface de refroidissement. L'élévation est formée au niveau d'une surface d'échangeur de chaleur d'une manière conique ou en forme de cône.

EP 2 653 792 A1 (PEER ROBERT [AT]) décrit un profilé conducteur de chaleur ayant un tuyau serré qui est en butée dans les surfaces de paroi de la limite de la rainure avec les deux régions de surface partielles formées dans la paroi. Les deux régions de surface partielles de la rainure sont reliées par des parois profilées. Les parois profilées en saillie depuis la périphérie externe du centre de la rainure sont interconnectées les unes aux autres à une distance prédéterminée. Les surfaces des parois profilées qui sont projetées depuis la périphérie externe du centre de la rainure varient.

DE 10 2018 111136 A1 (SCHLUDERMANN ARNOLD [AT]) concerne un élément chauffant / refroidissant pour le chauffage ou refroidissement de locaux, comprenant au moins un conduit à travers lequel un fluide caloporteur ou un fluide frigorigène peut circuler, ou plusieurs conduits. Selon l'invention, un corps isolant est disposé sur une face arrière des canaux, une couche intermédiaire étant prévue du côté du corps isolant faisant face aux canaux, la couche intermédiaire a une conductivité thermique plus élevée que le corps isolant et dans lequel la couche intermédiaire est en contact avec les canaux.

FR 2 712 380 A1 (MIKLOS ISTVAN [FR]) divulgue un système, destiné à chauffer ou refroidir des bâtiments, étant constitué d'au moins un élément actif à effet directionnel, réalisé sous la forme d'une structure en tôle allongée traversée longitudinalement par un fluide de chauffage ou de refroidissement dans un tube et équipé d'ailettes latérales. Les éléments actifs sont situés à l'intérieur d'une chambre qui est fondamentalement imperméable aux gaz, en particulier, et à la vapeur d'eau. La face de la chambre tournée vers le volume à chauffer ou à refroidir par une fine couche d'un matériau au moins partiellement diathermique est apte à transmettre un flux thermique. Le côté opposé de la chambre est délimité par une couche de matériau d'isolation thermique. Une section tubulaire centrale formée par le ou les éléments actifs entoure un tube en matière synthétique dans lequel circule le fluide de chauffage ou de refroidissement. Les éléments actifs sont en contact permanent avec le tube, qui est relié à une source de fluide de chauffage / refroidissement, notamment à travers des collecteurs de distribution, et les surfaces des éléments actifs tournées vers la couche diathermique sont revêtues d'un matériau qui a une capacité d'émission élevée dans le domaine infrarouge, p.ex. des grains de quartz, une peinture haute température, un revêtement métallique ou une combinaison de ceux-ci.

EP 0 955 503 A2 (RASCHLE KURT [CH]) divulgue un dispositif ayant une boîte de support longitudinale formée à partir d'un profil en forme de U ouvert en bas. Des faces de contact d'extrémité pour une plaque de base plate coulissante sont formées de chaque côté des pattes de profil de caisson. La plaque de base comporte au moins un canal conducteur de chaleur intégré. La plaque de base de rayonnement thermique est isolée thermiquement par rapport au profil de la boîte. Le canal et la plaque de base sont esp. en cuivre, laiton, aluminium ou alliage d'aluminium, avec un revêtement anticorrosion à l'extérieur. Le profilé porteur peut être une plaque métallique ou un profilé plastique moulé par injection ou extrudé.

WO 2019155007 A1 (ILO TECH [FR]; THERMACOME [FR]) concerne un procédé de réalisation d'un composant de faux plafond rayonnant modulaire, ce faux plafond étant destiné à une pièce d'un bâtiment équipé d'un réseau d'alimentation hydraulique en eau chaude ou froide, à partir d'une tuile standard dont la résistance thermique est supérieur ou égal à 2,5 K.m² / W, ce procédé comprenant les étapes suivantes:
- cette tuile permet de former au moins un premier élément dont la résistance thermique est inférieure à 0,33 K.m² / W,
- un échangeur à chaleur est placé sur ledit premier élément,
- un deuxième élément thermiquement isolant est placé sur ledit échangeur de chaleur, et
- des moyens de liaison entre l'échangeur et le réseau sont incorporés.

On connaît également des panneaux rayonnants utilisant une circulation d'eau entre 2 plaques embouties d'un léger motif tels que les panneaux Kigo^{®}. Ces derniers bénéficient d'une température de panneau uniforme. Grâce à sa géométrie formée de coussins, le contact avec la surface d'échange (95 %) est amélioré assurant un bon coefficient de transfert thermique. Les échangeurs KIGO^{®} se composent de deux tôles minces en acier inoxydable embouties suivant des motifs carrés répétitifs. Les emboutis des deux faces sont décalés obliquement d'un demi pas, une disposition qui permet le passage du liquide caloporteur et assure un flux uniformément réparti dans l'échangeur.

Les deux tôles sont soudées de façon régulière entre les motifs (soudage par points) et à leur périphérie (moletage).

En revanche et pour des raisons esthétiques (les panneaux sont apparents, fixés à la dalle haute de la pièce) ils doivent être relativement plats.

De par le fait que la surface des plaques émettrices visibles depuis le local est relativement plate, cette technologie, ainsi que celles précédemment citées, développent alors une surface de la plaque émettrice Sp très proche de la surface d'encombrement du plafond : 1m² d'encombrement au plafond représente 1m² de surface Sp émettrice.

La présente invention se propose de palier à cet inconvénient tout en bénéficiant d'un excellent coefficient de transfert thermique entre la plaque et les tubulures de par la grande surface de contact entre ces deux éléments.

D'autre part, comme la plaque émettrice et les tubulures doivent être réalisées dans la même matière afin de pouvoir concilier les mêmes contraintes de déformation tel que la dilatation thermique, il est nécessaire que ce matériau soit à la fois bon conducteur, qu'il puisse résister à la corrosion tout en étant léger afin de ne pas représenter un poids trop important pour le plafond. Malheureusement, il est difficile de trouver un matériau répondant à toutes ces contraintes. De plus, il est également avantageux de pouvoir présenter un système facile à installer et à démonter.

### Brève description de l'invention

Un but particulier de l'invention est de proposer un système rayonnant ou radiant permettant de chauffer ou de rafraîchir le local avec une très grande efficacité et homogénéité.

La présente invention se propose de palier aux inconvénients de l'art antérieur en développant une surface émettrice Sp sensiblement plus importante que la surface encombrée au plafond tout en bénéficiant d'un excellent coefficient de transfert thermique entre la plaque et les tubulures. La conjugaison de ces 2 points augmente alors la puissance thermique admissible.

D'autre part, la présente invention se propose également de résoudre le problème du poids supporté par le plafond en proposant de fournir un système rayonnant ultra léger par la sélection de matériaux différents pour la plaque émettrice et les tubulures appelées aussi tuyaux caloporteurs.

Selon l'invention, il est avantageux d'avoir la plaque émettrice et le tuyau caloporteur non solidaires l'un de l'autre de manière à pouvoir aisément monter et démonter le système rayonnant.

Selon l'invention, il est proposé un élément radiant modulaire pour plafond ou paroi d'un local de bâtiment, l'élément radiant ou rayonnant modulaire comprenant: un tuyau caloporteur ou tubulure caloportrice, dans un matériau non corrodable et conducteur thermique ayant un coefficient de conductivité d'au moins 15 Watt/m.K, apte à être relié à une conduite de distribution d'un bâtiment et/ou à un tuyau d'un autre élément rayonnant modulaire de façon à permettre le passage d'un fluide caloporteur à l'intérieur;
une plaque émettrice réalisée dans un matériau conducteur thermique, ayant un coefficient de conductivité d'au moins 15 Watt/m.K et ayant une masse volumique d'au plus 3000 kg/m³, étant en contact direct avec ledit tuyau, ladite plaque émettrice est emboutie ou façonnée sous une forme sinusoïdale de sorte à épouser au mieux la forme de la tubulure caloportrice.

En particulier, il est proposé un élément rayonnant modulaire de plafond ou de paroi pour le chauffage et/ou le rafraîchissement d'un local de bâtiment, l'élément rayonnant modulaire une fois monté audit plafond ou à ladite paroi comprend: une plaque émettrice disposée en dessous dudit plafond ou paroi dudit local; au moins un tuyau caloporteur formant un réseau de tubes, ledit tuyau caloporteur étant apte à être relié à une conduite de distribution d'un bâtiment et/ou à un tuyau caloporteur d'un autre élément rayonnant modulaire de façon à permettre un passage d'un fluide caloporteur à l'intérieur de celui-ci, ladite plaque émettrice en contact direct avec ledit tuyau caloporteur est emboutie ou façonné sous une forme sinusoïdale de sorte à épouser la forme du tuyau caloporteur, caractérisé en ce que ladite plaque émettrice et ledit au moins un tuyau caloporteur sont désolidarisés l'un de l'autre et en ce que ladite plaque émettrice est disposée au-dessus ou respectivement à la fois au-dessus et en dessous des tubes dudit au moins un tuyau caloporteur et où ladite plaque émettrice et ledit au moins un tuyau caloporteur sont constitués dans des matériaux différents.

Cette solution présente notamment l'avantage d'améliorer l'échange thermique entre le fluide caloporteur et la plaque émettrice du fait d'une plus grande surface de contact entre les deux et d'augmenter la surface de diffusion de la plaque émettrice en raison de sa forme sinusoïdale. A encombrement équivalent le système rayonnant selon l'invention développe une puissance thermique plus importante que celle décrite dans l'art antérieur. Cette propriété est conservée lorsqu'un plafond suspendu compatible (faux plafond transparent au rayonnement thermique) ou une fausse paroi d'un local de bâtiment, est installé en dessous du système rayonnant selon l'invention.

Selon l'invention, les buts sont en outre atteints par un système rayonnant pour plafond ou paroi d'un local de bâtiment comprenant une pluralité de ces éléments rayonnant modulaires. L'approche modulaire permet de répondre efficacement et rapidement aux exigences de dimensionnement du système, contribuant à la réduction des coûts de fabrication et d'installation du système radiant.

Du fait que ladite plaque émettrice et ledit au moins un tuyau caloporteur sont désolidarisés ou dissociés l'un de l'autre, à savoir non dépendants l'un de l'autre, il est de ce fait possible que ces deux éléments soient réalisés dans des matériaux différents.

La sélection de deux matériaux différents pour la fabrication de la plaque émettrice et du tuyau caloporteur permet d'optimiser l'atteinte des caractéristiques techniques requises pour chacun de ces composants à savoir, une conductivité thermique importante et une non corrosion du tuyau caloporteur et un poids réduit ainsi qu'une conductivité thermique importante pour la plaque émettrice.

D'autres avantages inattendus de la composition selon l'invention apparaîtront à la lecture de la description détaillée et des exemples de réalisation de l'invention.

### Brève description des figures

Des exemples de mise en oeuvre de l'invention sont indiqués dans la description illustrée par les figures annexées dans lesquelles :
- La fig. 1 illustre un exemple d'élément radiant modulaire, selon l'invention.
- La fig. 2 illustre une vue du dessus d'un élément radiant modulaire, selon l'invention ; la coupe médiane est indiquée par A-A.
- La fig. 3 illustre une vue d'une coupe médiane A-A de l'élément rayonnant modulaire selon un mode de réalisation particulier de l'invention dans lequel les tubes sont logés alternativement de part et d'autre de la plaque émettrice. La fig. 3 présente un tuyau de section ronde en contact avec une plaque émettrice de forme sinusoïdale.
- La fig. 4 illustre un élément radiant modulaire doté de collecteurs de raccordement des tubulures caloportrices.
- La fig. 5 illustre un système rayonnant ou radiant de climatisation et de chauffage.
- La fig. 6 illustre une vue d'une coupe médiane A-A de l'élément rayonnant modulaire selon d'autres modes de réalisations particuliers de l'invention. La fig. 6a. présente un montage où les tuyaux caloporteurs sont logés dans les canaux sous la plaque émettrice. La fig. 6b présente les tuyaux caloporteurs logés dans l'ensemble des canaux des deux côtés de la plaque émettrice.

### Description détaillée de l'invention

La création et le maintien d'un environnement agréable et sain dans des locaux d'un bâtiment permet le déroulement d'activités humaines telles que commerciales ou privées de manière convenable tout le long de l'année. En particulier, la création et le maintien de conditions de température prédéfinies dans un local permet de réduire les désagréments saisonniers et de réagir rapidement aux variations des charges thermiques. Le plafond rayonnant est le seul système de chauffage /rafraîchissement qui permet un brassage d'air, et ainsi de poussière, minimal. Ceci a un effet très positif sur la santé.

Bien que des méthodes similaires ou équivalentes à celles décrites ici puissent être utilisées dans la pratique, des méthodes appropriées sont décrites ci-dessous.

De plus, les méthodes et les modes de réalisations décrits sont uniquement illustratifs et ne sont pas destinés à être limitatifs. En cas de conflit, la présente description, y compris les définitions, prévaudra.

Sauf définition contraire, tous les termes techniques et scientifiques utilisés dans le présent document ont la même signification que celle généralement comprise par l'homme du métier auquel le sujet appartient. Telles qu'utilisées ici, les définitions suivantes sont fournies afin de faciliter la compréhension de la présente invention.

Le terme « comprendre ou comprend » est généralement utilisé dans le sens d'inclure, c'est-à-dire de permettre la présence d'une ou plusieurs caractéristiques ou composants. Tel qu'utilisé dans la description et les revendications, les formes singulières « un », « une » et « le », « la » incluent des références plurielles, sauf indication contraire du contexte.

Les chauffages dits « radiants » transmettent la chaleur par rayonnement, principalement dans les infrarouges (longueur d'onde entre 0,7 et 400 micromètres). Les rayonnements infrarouges utilisés se situent dans une plage de 1 à 7 micromètres (haute intensité), ou de 2 à 10 micromètres (basse intensité). Les panneaux rayonnants, ou les parasols chauffants disposés à la terrasse des cafés, sont des exemples de chauffages radiant. Ce type de chauffage n'utilise pas l'air comme vecteur de diffusion de la chaleur. De ce fait, il est particulièrement indiqué pour les applications présentant un renouvellement d'air important. Il est, par exemple, utilisé pour chauffer des espaces extérieurs comme des terrasses de café, des arrêts d'autobus, mais aussi des espaces intérieurs comme des hangars d'entretien des avions, des usines ou ateliers, des postes de travail. Il ne chauffe pas l'air, mais les objets qui y sont directement exposés.

Le chauffage radiant est efficace quelle que soit la température ambiante. Selon l'activité de la personne visée et la vitesse de l'air, le sentiment de confort peut être obtenu de 0 à 18 °C et plus.

Un « tube radiant » est un appareil de chauffage décentralisé permettant de chauffer par rayonnement infrarouge les bâtiments.

Un « fluide caloporteur » (littéralement porte-chaleur) est un fluide chargé de transporter la chaleur (ou le froid) entre deux ou plusieurs sources de température. Le terme « caloporteur » est synonyme de « caloriporteur ». Ces fluides interviennent dans les échangeurs de chaleur, par exemple les systèmes de refroidissement des moteurs thermiques, les réfrigérateurs, les chaudières, les climatiseurs, les capteurs solaires thermiques, les radiateurs des circuits électriques ou électroniques, les centrales électriques thermiques au charbon, au fioul, au gaz ou nucléaires, les échangeurs de chaleur d'eaux usées. Chaque fluide caloporteur est choisi en fonction de ses propriétés physico-chimiques, telles la viscosité, la capacité thermique volumique, la chaleur latente de vaporisation (ou de liquéfaction) en cas de changement de phase, la conductivité thermique, les propriétés anticorrosives, son coût et il doit être assez inoffensif pour le milieu. Le fluide caloporteur chauffé ou refroidi, est généralement un liquide tel que de l'eau ou de la saumure, il s'écoule à travers le tube caloporteur lorsque l'élément de climatisation ou élément rayonnant modulaire est utilisé.

Selon l'invention, le terme « emboutir » est défini comme étant le fait de travailler (un métal) avec un instrument (par exemple marteau, repoussoir), pour y former le relief d'une empreinte; c'est le fait de travailler une plaque de métal pour lui donner une forme voulue. Ainsi selon l'invention la plaque émettrice est emboutie ou façonnée sous une forme sinusoïdale afin de former des « canaux » ou portions de ladite plaque émettrice destinés à accueillir le tube caloporteur en épousant sa forme afin de l'inclure ou de l'encastrer sur une large partie de sa surface. Avantageusement, la moitié de la circonférence du tuyau caloporteur est en contact direct avec le canal de la plaque émettrice ainsi emboutie, de préférence les 2/3 voir plus de la circonférence du tuyau sont en contact direct avec le canal de la plaque émettrice. La surface de contact entre le tube caloporteur et la plaque émettrice sera ainsi largement augmentée.

L'invention vise à remédier à la puissance thermique limitée des panneaux rayonnants, à régime d'eau fixée, les deux facteurs influant à savoir la température Tp de la plaque émettrice ainsi que la surface Sp de la plaque émettrice. Le régime d'eau fixée est défini comme étant le régime de température du fluide caloporteur fixé.

L'invention ainsi constituée ne mise pas particulièrement sur le côté esthétique mais sur l'efficacité thermique. Les panneaux climatiques ou éléments radiant modulaires pourront alors être avantageusement utilisés au-dessus d'un faux-plafonds « transparent au rayonnement thermique » tel que par exemple le dispositif Barrisol Clim^{®} décrit dans le document WO 2018/037184 A1 (Jean- Marc SCHERRER [FR] ; Damien LANG [FR]).

En particulier, il est proposé un élément rayonnant modulaire (1) selon la revendication 1.

Selon un mode de réalisation de l'invention, ladite plaque émettrice (3) est simplement posée au-dessus des tubes (9) dudit au moins un tuyau caloporteur (4). La configuration particulière de l'élément rayonnant modulaire (1) selon l'invention permet une pose rapide et simplifiée de la plaque émettrice (3) sans avoir recours à un soudage ou une installation complexe. Dans ce mode de réalisation l'ensemble des tubes (9) dudit au moins un tuyau caloporteur (4) porteront ou supporteront ladite plaque émettrice (3).

Selon un autre mode de réalisation de l'invention, ladite plaque émettrice (3) est disposée ou glissée à la fois respectivement au-dessus et en dessous des tubes (9) dudit au moins un tuyau caloporteur (4). Ainsi comme pour le mode de réalisation précédent certains tubes (9) dudit au moins un tuyau caloporteur (4) porteront ou supporteront ladite plaque émettrice (3).

Le tuyau caloporteur (4) (également défini dans la présente invention par tubulure) est formé par un réseau de tubes (9). Selon un mode de réalisation de l'invention, le tuyau caloporteur (4) présente une forme en serpentin.

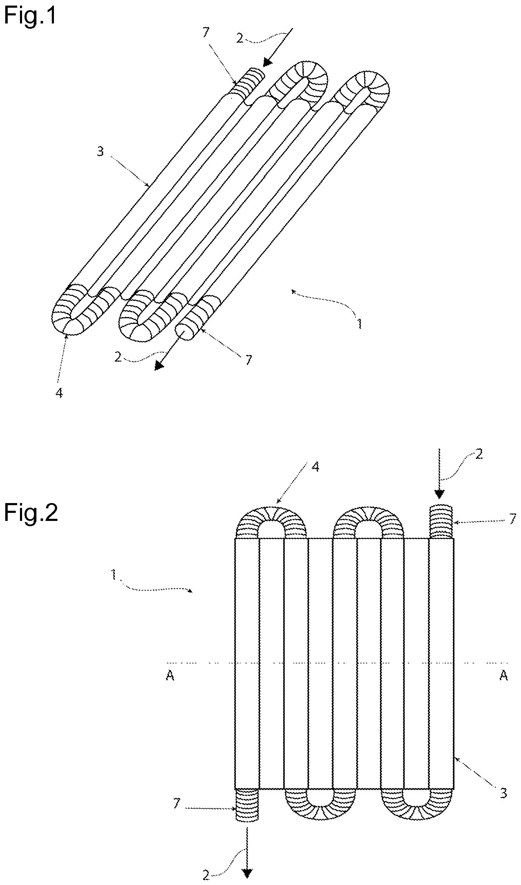

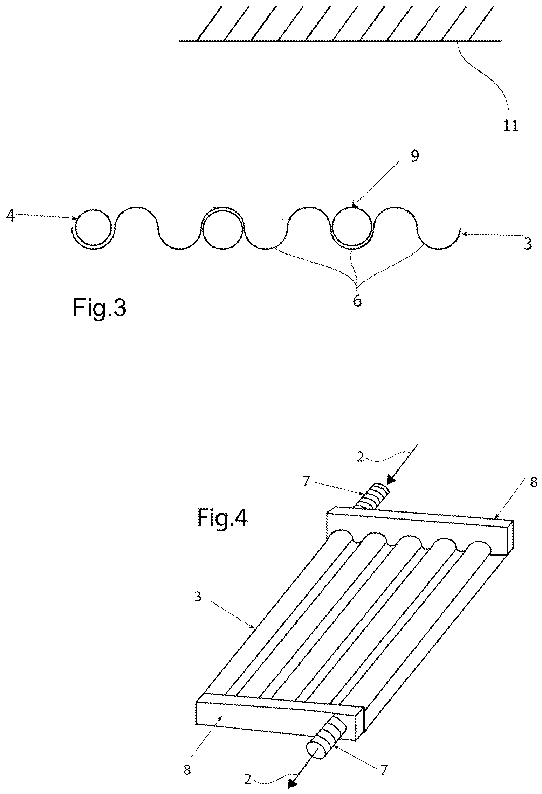

Suivant un premier principe (cf. fig. 1 et 3), la plaque émettrice (3) est emboutie ou façonnée selon une forme sinusoïdale de sorte à épouser la forme de la tubulure caloportrice (4).

Ainsi la surface conductrice entre la tubulure (4) et la plaque émettrice (3) est fortement augmentée comparativement aux panneaux rayonnants standards. De ce fait, l'échange thermique est fortement amélioré et on obtient une température très homogène de la plaque émettrice Tp.

De par sa forme emboutie la plaque émettrice (3) génère une surface active Sp supérieure à la surface d'encombrement au plafond. Ainsi la puissance thermique émise se voit sensiblement augmentée à régime d'eau fixée et à encombrement surfacique équivalent.

Bien entendu selon la forme du tuyau caloporteur (4), la plaque émettrice (3) pourra présenter un emboutissage de forme sinusoïdale (équivalent à une forme tubulaire et donc circulaire), venant épouser la forme d'un tuyau caloporteur (cf. fig. 3).

Afin d'améliorer ultérieurement l'efficience de l'échange thermique entre le tuyau caloporteur (4) (par ex. serpentin) et la plaque émettrice (3), ledit au moins un tuyau caloporteur (4) est réalisé dans un matériau non corrodable et conducteur thermique ayant un coefficient de conductivité d'au moins 15 Watt/m.K, de préférence 200 Watt/m.K et idéalement 300 Watt/m.K ou plus.

Le coefficient de conductivité est défini comme la quantité de chaleur en watt transmise par unité de surface et de temps sous un gradient de température de 1 °C / m ou 1 kelvin. Ce coefficient est noté lambda (λ) ou K, et peut être exprimé en watts par mètre-kelvin, soit W·m-1·K-1 : W : watt qui est une unité de puissance.

Un matériau est « bon conducteur thermique » lorsqu'il laisse facilement passer la chaleur (ou le froid), il est alors apte à facilement transférer la chaleur (ou le froid) à travers lui et à la diffuser vers un autre matériau ou milieu. Cette capacité à diffuser la chaleur (ou le froid) est caractérisée pour chaque matériau par une grandeur appelée conductivité thermique et exprimée en W/m.K qui représente le rapport de l'énergie thermique (chaleur ou froid) transférée par unité de temps. Plus la conductivité thermique d'un matériau est grande plus ce matériau est bon conducteur thermique.

Un exemple de conductivité thermique de différents matériaux donc la conductivité thermique est supérieure à 15W/m.K est présenté dans le tableau ci-après :

| **Conductivité thermique des substances métalliques** | |
|---|---|
| **Métaux** | **Conductivité thermique (W / m°C)** |
| Acier | 45 |
| Aluminium | 237 |
| Cuivre | 386 |
| Fer | 80 |
| Laiton | 120 |
| Nickel | 91 |
| Plomb | 35 |
| Zinc | 116 |

Un matériau est dit « non corrodable » lorsqu'il ne s'use pas prématurément lors de son contact régulier avec de l'eau. Certains métaux entre autres sont les plus sujets à ce phénomène de part une réaction chimique avec un oxydant, c'est le cas par exemple de la rouille du fer ou de l'acier.

Selon l'invention, ledit au moins un tuyau caloporteur (4) est constitué dans un matériau sélectionné parmi le cuivre, l'inox, l'acier galvanisé, zinc et le laiton et/ou leurs mélanges.

Selon un mode de réalisation préféré de l'invention, le tuyau caloporteur (4) est en cuivre. Dans ce cas, on peut utiliser un tuyau en cuivre présentant un diamètre interne compris entre 4 mm et 100 mm, de préférence entre 6 et 18 mm. Avantageusement, l'épaisseur de la paroi de ce tuyau (4) en cuivre est comprise entre 0.15 mm et 1.5 mm, de préférence entre 0.2 et 0.7 mm.

Respectivement, ladite plaque émettrice (3) est réalisée dans un matériau conducteur thermique ayant un coefficient de conductivité d'au moins 15 Watt/m.K, de préférence 200 Watt/m.K et idéalement 300 Watt/m.K ou plus et ayant une masse volumique d'au plus 3000 kg/m³ , de préférence 2800 kg/m³ et idéalement 2700 kg/m³ ou moins.

Selon l'invention, ladite plaque émettrice (3) est constituée dans un matériau sélectionné parmi l'aluminium, le magnésium, le graphite, et/ou leurs mélanges.

Selon un mode de réalisation préféré de l'invention, la plaque émettrice (3) est réalisée en aluminium.

Selon un autre mode de réalisation, la plaque émettrice (3) est emboutie de manière à pouvoir y encastrer le tube caloporteur dans ses canaux (6) sans que celui-ci puisse s'en désolidariser évitant ainsi la nécessité de recourir à des soudages.

Suivant un mode préféré, le tuyau caloporteur (4) présente à chacune de ses extrémités deux points ou éléments de raccordement (7) aptes à être reliés à une conduite de distribution de fluide caloporteur (2). Selon un mode de réalisation, lesdits éléments de raccordement (7) sont filetés. Avantageusement, le tuyau caloporteur (4) est cintré d'un seul tenant entre les deux éléments de raccordement (7).

Dans un mode de réalisation de l'invention, lesdits éléments de raccordement (7) sont situés sur deux côtés opposés de l'élément rayonnant modulaire (1).

Alternativement, lesdits éléments de raccordement (7) sont situés sur le même côté dudit élément rayonnant modulaire (1).

Suivant un mode de réalisation différent, l'élément rayonnant modulaire (1) comprend plusieurs tuyaux caloporteurs droits (4) raccordés entre eux par un collecteur étanche (8). De préférence, les éléments de raccordement (7) dédits tuyaux caloporteurs droits (4) sont connectés audit collecteur étanche (8).

De préférence, l'élément rayonnant modulaire (1) comprend une structure de montage pourvue de moyens de fixation (non représentés) permettant un assemblage et une installation dudit élément radiant modulaire (1).

Selon un mode de réalisation préféré, ladite plaque émettrice (3) fait face audit plafond ou à ladite paroi et au moins un tube (9) dudit au moins un tuyau caloporteur (4) est visible depuis le local.

Cependant l'élément rayonnant modulaire (1) selon l'invention pourra avantageusement être recouvert par un faux plafond ou une fausse paroi.

Il est également proposé de fournir un système rayonnant (5) pour plafond ou paroi d'un local de bâtiment comprenant une pluralité d'éléments rayonnant modulaires (1) selon l'invention.

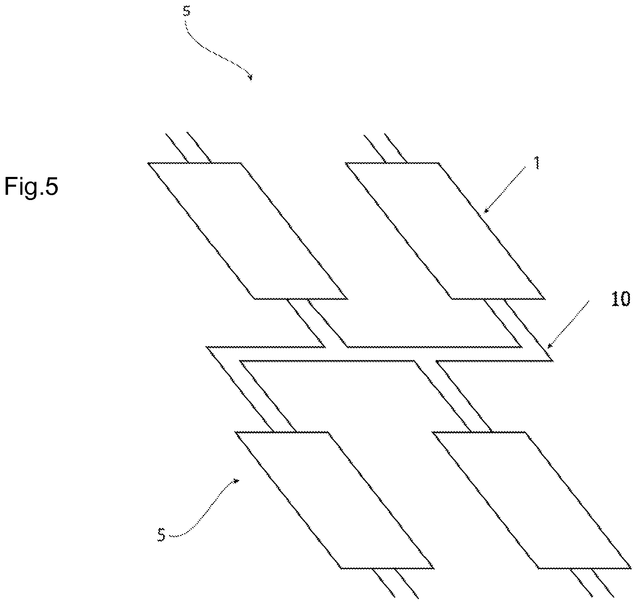

Ainsi, la réalisation d'un système rayonnant (5) au moyen d'au moins un élément rayonnant modulaire (1) facilite en outre sa fabrication et son installation grâce à une approche modulaire, contribuant à rendre la solution économiquement concurrentielle. De ce fait, il est possible de former un système rayonnant de grande taille pour plafond ou paroi d'un local de bâtiment comprenant une pluralité d'éléments rayonnant modulaires (1) tels que décrits dans la présente invention (voir Fig. 5).

Comme expliqué plus haut, l'élément rayonnant modulaire (1) comprend en outre une structure de montage permettant un assemblage et une installation de l'élément radiant modulaire (1). Avantageusement, la structure de montage est pourvue de moyens de fixation permettant un montage aisé de l'élément rayonnant modulaire (1) au-dessous d'un plafond ou sur une paroi d'un local de bâtiment. Avantageusement, la structure de montage est pourvue de moyens de fixation permettant une juxtaposition et une fixation de l'élément rayonnant modulaire (1) à côté d'un autre ou d'autres éléments rayonnants modulaires (1) identiques de sorte à former un système rayonnant (5) pour plafond ou paroi de plus grande dimension qui pourra être recouvert ou caché par un plafond suspendu ou une fausse paroi. Les moyens de fixation appropriés sont connus de l'homme du métier ; on citera par exemple une fixation sur tige filetée ou encore le supportage par une structure métallique rapportée fixée directement contre la dalle haute du plafond ou sur la paroi au sein du local desservi.

La présente invention se propose également de fournir un procédé de montage et ou de démontage d'un système rayonnant (5) pour plafond ou paroi d'un local de bâtiment (11), selon la revendication 16.

Avantageusement, le système rayonnant (5) pour plafond ou paroi d'un local de bâtiment (11) selon l'invention pourra facilement et rapidement être démonté par exemple pour remplacer un élément usé ou défectueux. En outre le démontage aisé de la plaque émettrice (3) peut permettre d'accéder à tout équipement situé au-dessus d'un élément rayonnant modulaire (1) comme une vanne ou tout autre équipement technique, ceci peut être particulièrement intéressant notamment de par le fait que les systèmes rayonnants encombrent en général une grande partie de la surface du plafond ce qui laisse très peu d'accès aux équipements situés dans ce dernier.

L'invention est décrite plus en détail par des exemples de réalisations ci-après. D'autres aspects et avantages de la présente invention apparaîtront à la lecture de ces exemples, qui doivent être considérés comme illustratifs et non limitatifs.

Les fig. 1 - 4 et 6 illustrent un élément rayonnant modulaire (1) pour un système rayonnant (5) de plafond ou de paroi (11) (fig. 5) destiné au chauffage et/ou au rafraîchissement d'un local d'un bâtiment par rayonnement thermique.

L'élément rayonnant modulaire (1) comprend un tuyau caloporteur (4) par exemple en forme de serpentin (fig. 1 et 2), dont les extrémités libres ou éléments de raccordement (7) sont connectables à une conduite de distribution du bâtiment et/ou à un tuyau d'un autre élément rayonnant modulaire (1) de sorte à permettre un passage d'un fluide caloporteur (2) à l'intérieur. L'élément rayonnant modulaire (1) comprend une plaque émettrice (3) reliée audit tuyau caloporteur (4), le long de la zone de la paroi du tuyau (4) en contact avec la plaque (3). La plaque émettrice (3) est de préférence en l'aluminium, magnésium ou en graphite, dont l'épaisseur ne dépasse pas 1,2 mm. La plaque émettrice « est emboutie afin de former de canaux (6) pour loger le tuyau caloporteur (4). Le canal de la plaque émettrice (3) est directement relié par encastrement à la section droite du tuyau (4), à laquelle il est affecté.

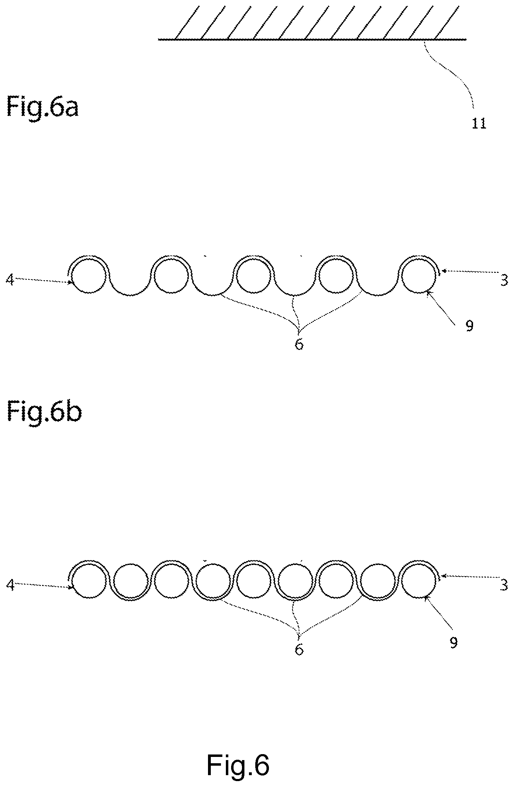

Avantageusement, la plaque émettrice (3) adopte une forme sinusoïdale de par son emboutissage (voir Fig. 3 et Fig. 6), de plus ladite plaque émettrice (3) est disposée au-dessus ou respectivement à la fois au-dessus et en dessous des tubes (9) dudit au moins un tuyau caloporteur (4).

Aussi, l'élément rayonnant modulaire (1) n'aura pas besoin d'un soudage pour assembler la plaque émettrice (3) au tuyau caloporteur (4) (par exemple serpentin).

Avantageusement, l'invention ne comporte pas de couche thermique isolante ou de plaque de soutien installée entre l'élément rayonnant modulaire (1) une fois monté et le plafond ou la paroi du local (12).

Dans une de ses versions, l'invention est dotée d'une tubulure ou tuyau caloporteur (4) d'un seul tenant cintrée entre chaque canal (6) de la plaque émettrice (3) emboutie, la tubulure (4) formant ainsi un serpentin.

La tubulure (4) génère à ses extrémités 2 points ou éléments de raccordement (7) à l'alimentation en fluide caloporteur (2) (voir figures 1, 2, 4).

Avantageusement les éléments de raccordement (7) sont filetés de sorte à y faciliter la connexion. Les éléments de raccordement (7) peuvent être situés sur 2 côtés opposées du panneau climatique ou élément rayonnant modulaire (1) ou sur le même côté. Avantageusement, l'invention pourra être dotée de plusieurs tubes (9) droits raccordées entre eux par un collecteur étanche (8) situé de chaque côté de l'élément rayonnant modulaire (1) (cf. fig.4). Les éléments de raccordement (7) sont alors également connectés aux collecteurs étanches (8).

Un système rayonnant (5) selon l'invention est représenté à la figure 5 et comprend plusieurs éléments rayonnants modulaires (1) reliés entre eux par un connecteur hydraulique (10) de sorte à former ledit système (5).

### Numéros de référence employés dans les figures :

- 1: élément rayonnant modulaire
- 2: fluide caloporteur
- 3: plaque émettrice
- 4: Tuyau caloporteur
- 5: Système rayonnant ou radiant de climatisation et de chauffage
- 6: canal de plaque émettrice
- 7: éléments de raccordement
- 8: collecteur étanche
- 9: tubes du tuyau caloporteur
- 10: connecteur hydraulique
- 11: plafond ou paroi d'un local de bâtiment

## Revendications

1. Elément rayonnant modulaire (1) de plafond ou de paroi pour le chauffage et/ou le rafraîchissement d'un local de bâtiment, l'élément rayonnant modulaire (1) une fois monté audit plafond 11 ou à ladite paroi comprenant:
une plaque émettrice (3) disposée en dessous dudit plafond ou paroi dudit local; au moins un tuyau caloporteur (4) formant un réseau de tubes (9), ledit tuyau caloporteur (4) étant apte à être relié à une conduite de distribution d'un bâtiment et/ou à un tuyau caloporteur (4) d'un autre élément rayonnant modulaire (1) de façon à permettre un passage d'un fluide caloporteur (2) à l'intérieur de celui-ci, ladite plaque émettrice (3) en contact direct avec ledit tuyau caloporteur (4) étant emboutie ou façonné sous une forme sinusoïdale de sorte à épouser la forme du tuyau caloporteur (4), ladite plaque émettrice (3) et ledit au moins un tuyau caloporteur (4) étant désolidarisés l'un de l'autre et ladite plaque émettrice (3) est disposée au-dessus ou respectivement à la fois au-dessus et en dessous des tubes (9) dudit au moins un tuyau caloporteur (4), ladite plaque émettrice (3) et ledit au moins un tuyau caloporteur (4) étant constitués dans des matériaux différents, **caractérisé en ce que** ledit au moins un tuyau caloporteur (4) est réalisé dans un matériau non corrodable et conducteur thermique ayant un coefficient de conductivité d'au moins 15 Watt/m.K et dont ledit matériau non corrodable et conducteur thermique est sélectionné parmi le cuivre, l'inox, l'acier galvanisé, le zinc, le laiton et/ou leurs mélanges et **en ce que** ladite plaque émettrice (3) est réalisée dans un matériau conducteur thermique ayant un coefficient de conductivité d'au moins 15 Watt/m.K et ayant une masse volumique d'au plus 3000 kg/m³ et dont ledit matériau conducteur thermique est sélectionné parmi l'aluminium, le magnésium, le graphite, et/ou leurs mélanges.

2. Elément rayonnant modulaire (1) selon la revendication 1, dans lequel le tuyau caloporteur (4) présente une forme en serpentin.

3. Elément rayonnant modulaire (1) selon l'une quelconque des revendications 1 à 2, **caractérisé en ce que** ledit au moins un tuyau caloporteur (4) est réalisé dans un matériau non corrodable et conducteur thermique ayant un coefficient de conductivité d'au moins 200 Watt/m.K.

4. Elément rayonnant modulaire (1) selon l'une quelconque des revendications 1 à 3, **caractérisé en ce que** ladite plaque émettrice (3) est réalisé dans un matériau conducteur thermique ayant un coefficient de conductivité d'au moins 200 Watt/m.K et ayant une masse volumique d'au plus 2800 kg/m³.

5. Elément rayonnant modulaire (1) selon l'une quelconque des revendications 1 à 4, **caractérisé en ce que** ledit au moins un tuyau caloporteur (4) est réalisé dans un matériau non corrodable et conducteur thermique ayant un coefficient de conductivité d'au moins 300 Watt/m.K.

6. Elément rayonnant modulaire (1) selon l'une quelconque des revendications 1 à 5, **caractérisé en ce que** ladite plaque émettrice (3) est réalisé dans un matériau conducteur thermique ayant un coefficient de conductivité d'au moins 300 Watt/m.K et ayant une masse volumique d'au plus 2700 kg/m³.

7. Elément rayonnant modulaire (1) selon l'une quelconque des revendications 1 à 6, dans lequel le tuyau caloporteur (4) présente à chacune de ses extrémités deux éléments de raccordement (7) aptes à être reliés à une conduite de distribution de fluide caloporteur (2).

8. Elément rayonnant modulaire (1) selon la revendication 7, dans lequel le tuyau caloporteur (4) est cintré d'un seul tenant entre les deux éléments de raccordement (V).

9. Elément rayonnant modulaire (1) selon les revendications 7 et 8, **caractérisé en ce que** lesdits éléments de raccordement (7) sont filetés.

10. Elément rayonnant modulaire (1) selon les revendications 7 à 9, **caractérisé en ce que** lesdits éléments de raccordement (7) sont situés sur deux côtés opposés de l'élément rayonnant modulaire (1).

11. Elément rayonnant modulaire (1) selon les revendications 7 à 10, **caractérisé en ce que** lesdits points de raccordement (7) sont situés sur le même côté dudit élément rayonnant modulaire (1).

12. Elément rayonnant modulaire (1) selon les revendications 1 à 6, **caractérisé en ce que** l'élément rayonnant modulaire (1) comprend plusieurs tuyaux caloporteurs droits (4) raccordés entre eux par au moins un collecteur étanche (8).

13. Elément rayonnant modulaire (1) selon l'une quelconque des revendications précédentes, **caractérisé en ce que** l'élément rayonnant modulaire (1) comprend une structure de montage pourvue de moyens de fixation permettant un assemblage et une installation dudit élément radiant modulaire (1).

14. Elément rayonnant modulaire (1) selon l'une quelconque des revendications précédentes, **caractérisé en ce que** ladite plaque émettrice (3) fait face audit plafond ou à ladite paroi et que au moins un tube (9) dudit au moins un tuyau caloporteur (4) est visible depuis le local.

15. Système rayonnant (5) pour plafond ou paroi d'un local de bâtiment comprenant une pluralité d'éléments rayonnant modulaires (1) selon l'une des revendications 1 à 14.

16. Procédé de montage et ou de démontage d'un système rayonnant (5) pour plafond ou paroi d'un local de bâtiment (11) selon la revendication 15, ledit système rayonnant (5) comprenant au moins un élément rayonnant modulaires (1) comportant une plaque émettrice (3) disposée en dessous dudit plafond ou paroi dudit local; et au moins un tuyau caloporteur (4) formant un réseau de tubes (9), ledit tuyau caloporteur (4) étant apte à être relié à une conduite de distribution d'un bâtiment et/ou à un tuyau caloporteur (4) d'un autre élément rayonnant modulaire (1) de façon à permettre un passage d'un fluide caloporteur (2) à l'intérieur de celui-ci, ladite plaque émettrice (3) en contact direct avec ledit tuyau caloporteur (4) étant emboutie ou façonné sous une forme sinusoïdale de sorte à épouser la forme du tuyau caloporteur (4), ladite plaque émettrice (3) et ledit au moins un tuyau caloporteur (4) étant désolidarisés l'un de l'autre et ledit au moins un tuyau caloporteur (4) étant installé audit plafond ou paroi d'un local de bâtiment (11) et ladite plaque émettrice (3) est disposée par la suite au-dessus ou respectivement à la fois au-dessus et en dessous des tubes (9) dudit au moins un tuyau caloporteur (4) de manière à être portée par ledit au moins un tuyau caloporteur (4), ladite plaque émettrice (3) et ledit au moins un tuyau caloporteur (4) étant constitués dans des matériaux différents **caractérisé en ce que** ledit au moins un tuyau caloporteur (4) est réalisé dans un matériau non corrodable et conducteur thermique ayant un coefficient de conductivité d'au moins 15 Watt/m.K et dont ledit matériau non corrodable et conducteur thermique est sélectionné parmi le cuivre, l'inox, l'acier galvanisé, le zinc, le laiton et/ou leurs mélanges et **en ce que** ladite plaque émettrice (3) est réalisée dans un matériau conducteur thermique ayant un coefficient de conductivité d'au moins 15 Watt/m.K et ayant une masse volumique d'au plus 3000 kg/m³ et dont ledit matériau conducteur thermique est sélectionné parmi l'aluminium, le magnésium, le graphite, et/ou leurs mélanges.

## Patentansprüche

1. Modulares Decken- oder Wandstrahlerelement (1) zum Heizen und/oder Kühlen eines Gebäuderaums, das modulare Strahlerelement (1), nachdem es an der Decke 11 oder an der Wand montiert ist, umfassend:
eine Emissionsplatte (3), die unterhalb der Decke oder der Wand des Raums angeordnet ist; mindestens ein Wärmeübertragungsrohr (4), das ein Röhrennetzwerk (9) ausbildet, wobei das Wärmeübertragungsrohr (4) geeignet ist, um mit einer Verteilungsleitung eines Gebäudes und/oder mit einem Wärmeübertragungsrohr (4) eines anderen modularen Strahlerelements (1) verbunden zu werden, um einen Durchlass eines Wärmeübertragungsfluids (2) in das Innere von diesem zu ermöglichen, wobei die Emissionsplatte (3) in direktem Kontakt mit dem Wärmeübertragungsrohr (4) tiefgezogen oder zu einer Sinusform gestaltet ist, um sich an die Form des Wärmeübertragungsrohrs (4) anzupassen, wobei die Emissionsplatte (3) und das mindestens eine Wärmeübertragungsrohr (4) voneinander getrennt sind und die Emissionsplatte (3) über oder jeweils zugleich über und unter den Röhren (9) des mindestens einen Wärmeübertragungsrohrs (4) angeordnet ist, wobei die Emissionsplatte (3) und das mindestens eine Wärmeübertragungsrohr (4) aus unterschiedlichen Materialien bestehen, **dadurch gekennzeichnet, dass** das mindestens eine Wärmeübertragungsrohr (4) aus einem nicht korrodierbaren und wärmeleitenden Material hergestellt ist, das einen Leitfähigkeitskoeffizienten von mindestens 15 Watt/m.K besitzt, und wobei das nicht korrodierbare und wärmeleitende Material aus Kupfer, rostfreiem Metall, verzinktem Stahl, Zink, Messing und/oder ihren Mischungen ausgewählt ist, und dass die Emissionsplatte (3) aus einem wärmeleitenden Material hergestellt ist, das einen Leitfähigkeitskoeffizienten von mindestens 15 Watt/m.K besitzt und eine Dichte von höchstens 3000 kg/m³ besitzt, und wobei das wärmeleitende Material aus Aluminium, Magnesium, Graphit und/oder ihren Mischungen ausgewählt ist.

2. Modulares Strahlerelement (1) nach Anspruch 1, wobei das Wärmeübertragungsrohr (4) eine Schlangenform vorweist.

3. Modulares Strahlerelement (1) nach einem der Ansprüche 1 bis 2, **dadurch gekennzeichnet, dass** das mindestens eine Wärmeübertragungsrohr (4) aus einem nicht korrodierbaren und wärmeleitenden Material hergestellt ist, das einen Leitfähigkeitskoeffizienten von mindestens 200 Watt/m.K besitzt.

4. Modulares Strahlerelement (1) nach einem der Ansprüche 1 bis 3,
**dadurch gekennzeichnet, dass** die Emissionsplatte (3) aus einem wärmeleitenden Material hergestellt ist, das einen Leitfähigkeitskoeffizienten von mindestens 200 Watt/m.K besitzt und eine Dichte von höchstens 2800 kg/m³ besitzt.

5. Modulares Strahlerelement (1) nach einem der Ansprüche 1 bis 4,
**dadurch gekennzeichnet, dass** das mindestens eine Wärmeübertragungsrohr (4) aus einem nicht korrodierbaren und wärmeleitenden Material hergestellt ist, das einen Leitfähigkeitskoeffizienten von mindestens 300 Watt/m.K besitzt.

6. Modulares Strahlerelement (1) nach einem der Ansprüche 1 bis 5,
**dadurch gekennzeichnet, dass** die Emissionsplatte (3) aus einem wärmeleitenden Material hergestellt ist, das einen Leitfähigkeitskoeffizienten von mindestens 300 Watt/m.K besitzt und eine Dichte von höchstens 2700 kg/m³ besitzt.

7. Modulares Strahlerelement (1) nach einem der Ansprüche 1 bis 6, wobei das Wärmeübertragungsrohr (4) an jedem seiner Enden zwei Anschlusselemente (7) vorweist, die geeignet sind, um mit einer Verteilungsleitung von Wärmeübertragungsfluid (2) verbunden zu werden.

8. Modulares Strahlerelement (1) nach Anspruch 7, wobei das Wärmeübertragungsrohr (4) in einem Stück zwischen den zwei Anschlusselementen (V) gebogen ist.

9. Modulares Strahlerelement (1) nach den Ansprüchen 7 und 8,
**dadurch gekennzeichnet, dass** die Anschlusselemente (7) mit Gewinde sind.

10. Modulares Strahlerelement (1) nach den Ansprüchen 7 bis 9,
**dadurch gekennzeichnet, dass** die Anschlusselemente (7) auf zwei Seiten gegenüber des modularen Strahlerelements (1) gelegen sind.

11. Modulares Strahlerelement (1) nach den Ansprüchen 7 bis 10,
**dadurch gekennzeichnet, dass** die Anschlusspunkte (7) auf der gleichen Seite des modularen Strahlerelements (1) gelegen sind.

12. Modulares Strahlerelement (1) nach den Ansprüchen 1 bis 6,
**dadurch gekennzeichnet, dass** das modulare Strahlerelement (1) mehrere gerade Wärmeübertragungsrohre (4) umfasst, die durch mindestens einen dichten Sammler (8) miteinander angeschlossen sind.

13. Modulares Strahlerelement (1) nach einem der vorstehenden Ansprüche,
**dadurch gekennzeichnet, dass** das modulare Strahlerelement (1) eine Montagestruktur umfasst, die mit Befestigungsmitteln versehen ist, die einen Zusammenbau und eine Installation des modularen Strahlerelements (1) ermöglichen.

14. Modulares Strahlerelement (1) nach einem der vorstehenden Ansprüche,
**dadurch gekennzeichnet, dass** die Emissionsplatte (3) der Decke oder der Wand gegenübersteht und dass mindestens eine Röhre (9) des mindestens einen Wärmeübertragungsrohrs (4) von dem Raum aus sichtbar ist.

15. Strahlersystem (5) für die Decke oder die Wand eines Gebäuderaums, umfassend eine Vielzahl von modularen Strahlerelementen (1) nach einem der Ansprüche 1 bis 14.

16. Verfahren zum Montieren oder Abmontieren eines Strahlersystems (5) für die Decke oder die Wand eines Gebäuderaums (11) nach Anspruch 15, das Strahlersystem (5) umfassend mindestens ein modulares Strahlerelement (1), das eine Emissionsplatte (3), die unterhalb der Decke oder der Wand des Raums angeordnet ist; und mindestens ein Wärmeübertragungsrohr (4) aufweist, das ein Röhrennetzwerk (9) ausbildet, wobei das Wärmeübertragungsrohr (4) geeignet ist, um mit einer Verteilungsleitung eines Gebäudes und/oder mit einem Wärmeübertragungsrohr (4) eines anderen modularen Strahlerelements (1) verbunden zu werden, um einen Durchlass eines Wärmeübertragungsfluids (2) in das Innere von diesem zu ermöglichen, wobei die Emissionsplatte (3) in direktem Kontakt mit dem Wärmeübertragungsrohr (4) tiefgezogen oder zu einer Sinusform gestaltet ist, um sich an die Form des Wärmeübertragungsrohrs (4) anzupassen, wobei die Emissionsplatte (3) und das mindestens eine Wärmeübertragungsrohr (4) voneinander getrennt sind und das mindestens eine Wärmeübertragungsrohr (4) an der Decke oder der Wand eines Gebäuderaums (11) installiert ist und die Emissionsplatte (3) nachher über oder jeweils zugleich über und unter den Röhren (9) des mindestens einen Wärmeübertragungsrohrs (4) angeordnet ist, um durch das mindestens eine Wärmeübertragungsrohr (4) getragen zu werden, wobei die Emissionsplatte (3) und das mindestens eine Wärmeübertragungsrohr (4) aus unterschiedlichen Materialien bestehen, **dadurch gekennzeichnet, dass** das mindestens eine Wärmeübertragungsrohr (4) aus einem nicht korrodierbaren und wärmeleitenden Material hergestellt ist, das einen Leitfähigkeitskoeffizienten von mindestens 15 Watt/m.K besitzt, und wobei das nicht korrodierbare und wärmeleitende Material aus Kupfer, rostfreiem Metall, verzinktem Stahl, Zink, Messing und/oder ihren Mischungen ausgewählt ist, und dass die Emissionsplatte (3) aus einem wärmeleitenden Material hergestellt ist, das einen Leitfähigkeitskoeffizienten von mindestens 15 Watt/m.K besitzt und eine Dichte von höchstens 3000 kg/m³ besitzt und wobei das wärmeleitende Material aus Aluminium, Magnesium, Graphit und/oder ihren Mischungen ausgewählt ist.

## Claims

1. A modular radiating element (1) of a ceiling or wall for heating and/or cooling a building room, the modular radiating element (1) once mounted to said ceiling 11 or to said wall comprising:
an emitting plate (3)
arranged below said ceiling or wall of said room; at least one heat transfer pipe (4) forming an array of tubes (9), said heat transfer pipe (4) being able to be connected to a distribution conduit of a building and/or to a heat transfer pipe (4) of another modular radiating element (1) so as to allow a heat transfer fluid (2) to pass inside thereof, said emitting plate (3) in direct contact with said heat transfer pipe (4) being stamped or shaped in a sinusoidal shape so as to match the shape of the heat transfer pipe (4), said emitting plate (3) and said at least one heat transfer pipe (4) being separated from each other and said emitting plate (3) is arranged above or respectively both above and below the tubes (9) of said at least one heat transfer pipe (4), said emitting plate (3) and said at least one heat transfer pipe (4) being made of different materials, **characterized in that** said at least one heat transfer pipe (4) is made of a non-corrodable and thermally conductive material having a conductivity coefficient of at least 15 Watt/m.K and of which said non-corrodable and thermally conductive material is selected from among copper, stainless steel, galvanized steel, zinc, brass and/or mixtures thereof and **in that** said emitting plate (3) is made of a heat-conducting material having a conductivity coefficient of at least 15 Watt/m.K and having a density of at most 3000 kg/m³ and of which said heat-conducting material is selected from aluminum, magnesium, graphite, and/or mixtures thereof.

2. The modular radiating element (1) according to claim 1, wherein the heat transfer pipe (4) has a serpentine shape.

3. The modular radiating element (1) according to any one of claims 1 to 2, **characterized in that** said at least one heat transfer pipe (4) is made of a non-corrodable and thermally conductive material having a conductivity coefficient of at least 200 Watt/m.K.

4. The modular radiating element (1) according to any one of claims 1 to 3, **characterized in that** said emitting plate (3) is made of a thermally conductive material having a conductivity coefficient of at least 200 Watt/m.K and having a density of at most 2800 kg/m³.

5. The modular radiating element (1) according to any one of claims 1 to 4, **characterized in that** said at least one heat transfer pipe (4) is made of a non-corrodable and thermally conductive material having a conductivity coefficient of at least 300 Watt/m.K.

6. The modular radiating element (1) according to any one of claims 1 to 5, **characterized in that** said emitting plate (3) is made of a thermally conductive material having a conductivity coefficient of at least 300 Watt/m.K and having a density of at most 2700 kg/m³.

7. The modular radiating element (1) according to any one of claims 1 to 6, wherein the heat transfer pipe (4) has at each of its ends two connection elements (7) able to be connected to a heat transfer fluid (2) distribution conduit.

8. The modular radiating element (1) according to claim 7, wherein the heat transfer pipe (4) is bent in a single piece between the two connection elements (V).

9. The modular radiating element (1) according to claims 7 and 8, **characterized in that** said connection elements (7) are threaded.

10. The modular radiating element (1) according to claims 7 to 9, **characterized in that** said connection elements (7) are located on two opposite sides of the modular radiating element (1).

11. The modular radiating element (1) according to claims 7 to 10, **characterized in that** said connection elements (7) are located on the same side of said modular radiating element (1).

12. The modular radiating element (1) according to claims 1 to 6, **characterized in that** the modular radiating element (1) comprises a plurality of straight heat transfer pipes (4) connected together by at least one sealed manifold (8).

13. The modular radiating element (1) according to any one of the preceding claims, **characterized in that** the modular radiating element (1) comprises a mounting structure provided with fastening means enabling an assembly and installation of said modular radiating element (1).

14. The modular radiating element (1) according to any one of the preceding claims, **characterized in that** said emitting plate (3) faces said ceiling or said wall and that at least one tube (9) of said at least one heat transfer pipe (4) is visible from the room.

15. A radiating system (5) for a ceiling or wall of a building room comprising a plurality of modular radiating elements (1) according to one of claims 1 to 14.

16. A method for mounting or dismounting a radiating system (5) for a ceiling or wall of a building room (11) according to claim 15, said radiating system (5) comprising at least one modular radiating element (1) comprising an emitting plate (3) arranged below said ceiling or wall of said room; and at least one heat transfer pipe (4) forming an array of tubes (9), said heat transfer pipe (4) being able to be connected to a distribution conduit of a building and/or to a heat transfer pipe (4) of another modular radiating element (1) so as to allow a heat transfer fluid (2) to pass inside thereof, said emitting plate (3) in direct contact with said heat transfer pipe (4) being stamped or shaped in a sinusoidal shape so as to match the shape of the heat transfer pipe (4), said emitting plate (3) and said at least one heat transfer pipe (4) being separated from each other said at least one heat transfer pipe (4) being installed in said ceiling or wall of a building room (11) and said emitting plate (3) is subsequently arranged above or respectively both above and below the tubes (9) of said at least one heat transfer pipe (4) so as to be carried by said at least one heat transfer pipe (4), said emitting plate (3) and said at least one heat transfer pipe (4) being made of different materials, **characterized in that** said at least one heat transfer pipe (4) is made of a non-corrodable and thermally conductive material having a conductivity coefficient of at least 15 Watt/m.K and of which said non-corrodable and thermally conductive material is selected from among copper, stainless steel, galvanized steel, zinc, brass and/or mixtures thereof and **in that** said emitting plate (3) is made of a heat-conducting material having a conductivity coefficient of at least 15 Watt/m.K and having a density of at most 3000 kg/m³ and of which said heat-conducting material is selected from aluminum, magnesium, graphite, and/or mixtures thereof.
